# EUROPÄISCHE PATENTSCHRIFT

(11) **EP 1 864 036 B1**
(45) Veröffentlichungstag und Bekanntmachung des Hinweises auf die Patenterteilung: **17.09.2008**
(21) Anmeldenummer: 05795029.7
(22) Anmeldetag: 28.09.2005
(51) Int. Cl.: F16H 57/02

(54) **STIRNRADGETRIEBE**
SPUR GEAR DRIVE
REDUCTEUR A ENGRENAGES DROITS

(30) Priorität: 01.04.2005 WO PCT/EP2005/003427
(43) Veröffentlichungstag der Anmeldung: 12.12.2007
(73) Patentinhaber: Getriebebau Nord GmbH & Co. KG, 22941 Bargteheide (DE)
(72) Erfinder: BOUCHE, Bernhard, 22941 Bargteheide (DE)
(74) Vertreter: Glawe, Delfs, Moll
(86) Internationale Anmeldenummer: PCT/EP2005/010493
(87) Internationale Veröffentlichungsnummer: WO 2006/105809

(56) Entgegenhaltungen:
- EP-A- 0 507 309
- EP-A- 0 686 788
- DE-A1- 3 133 635
- DE-A1- 4 227 702
- DE-A1- 10 061 501
- FR-A- 2 441 108
- GB-A- 1 227 232
- TORELLI C: "UNIVERSELL EINSETZBARE GETRIEBE MIT MONOBLOCK-GEHAUSE" ANTRIEBSTECHNIK, KRAUSSKOPF VERLAG FUR WIRTSCHAFT GMBH. MAINZ, DE, Bd. 31, Nr. 8, 1. August 1992 (1992-08-01), Seiten 50,53-54,56, XP000298656 ISSN: 0722-8546

## Beschreibung

Ein dem Oberbegriff des Anspruchs 1 entsprechendes, bekanntes Stirnradgetriebe (EP-A-686788) weist ein einstückiges Gehäuse auf. Dies bildet zwischen einer abtriebsseitigen Gehäusewand und einer Zwischenwand eine abtriebsseitige Kammer, die die Abtriebswelle mit dem Abtriebszahnrad enthält. Damit das Abtriebszahnrad in der abtriebsseitigen Kammer montiert werden kann, muß deren Seitenwand eine Montageöffnung aufweisen. Diese wird dadurch geschaffen, daß der antriebsseitige Gehäusedeckel über eine schräg verlaufende Teilungsfuge mit dem Getriebegehäuse verbunden ist, die sich bis über die abtriebsseitige Kammer erstreckt. Der Deckel wird durch Befestigungsschrauben mit dem Getriebegehäuse verbunden, die achsparallel, also nicht lotrecht zur Teilungsfuge verlaufen. Das Gehäuse bildet ferner eine antriebsseitige Kammer, in die das Motorritzel durch den Deckel hineinragt. Dieses kämmt mit einem Zwischenzahnrad, das auf einer Zwischenwelle in der antriebsseitigen Kammer angeordnet ist. Die Zwischenwelle trägt ein Zwischenritzel, das das Abtriebszahnrad antreibt. Sie ist beiderseits des Zwischenritzels gelagert, nämlich in der abtriebsseitigen Wand und in der Zwischenwand. Das antriebsseitige, nackte Ende der Zwischenwelle ragt in eine entsprechende Bohrung des Deckels, um diesen zu zentrieren. Diese Bohrung ist nicht als Lager ausgebildet.

Diese bekannte Anordnung hat sich nicht bewährt. *Erstensist* die Montage sehr schwierig, weil die Befestigungsschrauben auf den Deckel Kräfte ausüben, die eine parallel zur Teilungsfuge verlaufende Kraftkomponente haben, die den Deckel gegenüber dem Gehäuse zu verschieben trachtet. Eine solche Verschiebung muß aber unbedingt vermieden werden, weil sie zu Reibkontakt der Welle mit der Zentrierbohrung im Deckel führt. Das kann nicht nur eine Beschädigung der Welle nach sich ziehen, sondern auch zur Überlastung der Zwischenwellenlager führen. Wie dieses Problem gelöst werden könnte, ist nicht ersichtlich. Insbesondere kann man die schräge Teilungsfuge nicht einfach durch die sonst übliche lotrecht zur Achsrichtung verlaufenden Teilungsfuge ersetzen, weil dann die Montage des Abtriebszahnrads nicht möglich wäre. - Ein weiterer Nachteil der bekannten Konstruktion besteht darin, daß die Schrägstellung der Teilungsfuge eine genaue Justierung des Deckels um eine zur schrägen Teilungsfuge lotreche Achse verlangt, da eine ungenaue Positionierung des Deckels in bezug auf diese Achse zu einem Winkelfehler in der Verzahnung des Eintriebritzels mit dem Zwischenzahnrad der ersten Stufe führen würde. Diese genaue Justierung ist praktisch kaum zu erreichen.

Der Erfindung liegt die Aufgabe zugrunde, den Montageaufwand bei hoher Gehäusesteifigkeit und geringem Platzbedarf zu senken. Die erfindungsgemäße Lösung liegt in den Merkmalen des Anspruchs 1 und vorzugsweise denen der Unteransprüche.

Dadurch daß die Abtriebswelle mit dem Abtriebszahnrad und den zugehörigen Lagern in dem insoweit hinterschnittfrei ausgebildeten Gehäuse montierbar ist, ist die Schaffung einer seitlichen Montageöffnung durch eine schräge Deckelfuge entbehrlich. Dadurch können die oben erläuterten Nachteile vermieden werden. Die Montage ist sehr einfach, weil nach dem Einsetzen der Wellen und Räder nur noch der Deckel aufgesetzt zu werden braucht. Dank dem im Deckel vorgesehenen dritten Lager der Zwischenwelle zentriert sich der Deckel selbsttätig. Dabei führt die dreifache Lagerung zu günstigen Kräfteverhältnissen an der zwischenwelle und deren Lagern, wodurch eine geringere Dimensionierung derselben und damit eine Verringerung des Platzbedarfs ermöglicht wird. Es bedarf auch keiner zusätzlichen Montageschritte zur axialen Festlegung der Welle, weil diese durch die beiden Lager an den Enden der Welle bewirkt werden kann.

Zwar ist eine Dreifachlagerung einer Getriebewelle bekannt (Prospekt "SEW Eurodrive", Bild 5.3). Jedoch handelt es sich dabei um eine Getriebe mit mehrteiligem Gehäuse, das nicht nur an der Antriebsseite, sondern auch an der Abtriebsseite eines Gehäusemittelteils eine Montageöffnung aufweist sowie eine Zwischenwand enthält. Die dreifache Lagerung der Zwischenwelle dieses Getriebes befindet sich in Lagerbohrungen, die von dem Gehäusemittelteil gebildet werden. Dies bringt eine umständliche Montage mit sich, weil die Zwischenwelle und ihre Lager von beiden Seiten des Gehäusemittelteils montiert werden müssen. Ferner hat die Mehrteiligkeit des Gehäuses gegenüber einstückigen Gehäusen mit nur einer Montageöffnung den Nachteil geringerer Steifigkeit bzw. bei gleicher Steifigkeit den Nachteil höheren Gewichts und höherer Kosten. Irgendwelche Hinweise darauf, wie man bei dem eingangs angegebenen Getriebe die Montage erleichtern und Zentrierfehler vermeiden kann, lassen sich diesem Stand der Technik nicht entnehmen.

Der bekannte Nachteil einer Dreifachlagerung einer Welle aufgrund ihrer statischen Unbestimmtheit fällt bei der erfindungsgemäßen Anordnung nicht ins Gewicht, weil der Deckel dank der von der Welle herrührenden Zentrierwirkung genau in derjenigen Stellung fixiert wird, in welcher das dritte, im Deckel angeordnete Lager mit den beiden anderen Lagern fluchtet. Auch kann es nicht zu Winkelfehlern in der Verzahnung der ersten Stufe kommen, weil die Deckelfuge lotrecht zur Achsrichtung steht. Ein weiterer Vorteil der Erfindung besteht darin, daß das mittlere der drei Wellenlager stark entlastet wird und daher kleiner dimensioniert werden kann. Dadurch ergibt sich im Bereich dieser Lagerung ein Raumgewinn, der für die Anordnung der Abtriebswelle oder deren Lagerung genutzt werden kann. Während bei der erstgenannten bekannten Konstruktion das Zwischenzahnrad möglichst nahe an dem in der Zwischenwand vorgesehenen Lager der Zwischenwelle angeordnet sein muß, um die Biegebeanspruchung der Welle zu begrenzen, eröffnet die Erfindung die Möglichkeit, dieses Zahnrad entfernt von dem mittleren Zwischenwellenlager anzuordnen. Dies ergibt größere Gestaltungsfreiheit. Beispielsweise wird dadurch die Möglichkeit geschaffen, das antriebsseitige Abtriebswellenlager und das mittlere Zwischenwellenlager in Achsrichtung versetzt zueinander anzuordnen, wobei das mittlere Zwischenwellenlager antriebsferner angeordnet werden kann als das Abtriebswellenlager. Ein anderes Ergebnis dieser Gestaltungsfreiheit ergibt sich bei Gehäusen, die wahlweise für zwei- oder dreistufige Getriebe verwendet werden. Bei dem zweistufigen Fall ist das Zwischenzahnrad deckelnah anzuordnen, während es im dreistufigen Fall deckelfern zu montieren ist, weil die deckelnahe Position von dem weiteren Zahnrad eingenommen wird. Diese unterschiedliche Positionierung des Zwischenzahnrads ist dank der Erfindung trotz reduzierter Dimensionierung der zwischenwelle und ihrer Lager möglich, weil diese beiderseits des Zwischenzahnrads angeordnet sind.

Das erfindungsgemäße Getriebe ist sehr montagefreundlich, weil es für eine korrekte Montage des Deckels lediglich erforderlich ist, die Zwischenwelle in ihrem abtriebsseitigen und mittleren Lager zu montieren und anschließend den Deckel in der dadurch vorgegebenen Lage aufzusetzen und zu verschrauben. Die Montagefreundlichkeit kommt besonders dann zur Geltung, wenn auch der übrige Aufbau des Gehäuses montagefreundlich ist. Dies gilt insbesondere für eine Konstruktion, bei welcher nicht nur die zwischenwelle sondern auch die Abtriebswelle mit den zugehörigen Rädern und Lagern vormontiert und als fertige Einheit in das Gehäuse eingesetzt werden kann. Dies ist der Fall bei einem Getriebe, dessen abtriebsseitige Kammer ausschließlich von zwei Flächen begrenzt ist, von denen die erste für die Aufnahme der Abtriebswelle hinterschnittfrei sich zur Abtriebsseite hin öffnet, während die andere sich zur Montage der Zwischenwelle hinterschnittfrei zur Antriebsseite hin öffnet.

Bei einer anderen Ausführungsform kann die Abtriebswelleneinheit ebenso wie die Zwischenwelleneinheit von der Antriebsseite her montiert werden, indem die abtriebsseitige Kammer sich zur Montage der Abtriebswelle zur Antriebsseite hin hinterschnittfrei öffnet.

In den Ansprüchen ist die Hinterschnittfreiheit durch den Zusatz eingeschränkt, daß sie mindestens im Rohzustand des Guß- oder Preßteils vorhanden sein soll. Dadurch soll verhindert werden, daß dies Merkmal durch eine erst während der Bearbeitung vorgenommene, bezüglich der Montierbarkeit wirkungslose Eindrehung umgangen wird. Im Fertigzustand genügt es, wenn der Durchmesser der Aufnahmebohrung beim antriebsseitigen Lager der Abtriebswelle mindestens so groß ist, daß das Abtriebszahnrad und das abtriebsseitige Abtriebswellenlager hindurchpassen. Bei der Zwischenwelle genügt es entsprechend, wenn die Aufnahmebohrung beim montageseitigen Lager einen so großen Durchmesser hat, daß das Zwischenritzel und das abtriebsseitige Lager der Zwischenwelle hindurchpassen. Es kommt nicht darauf an, ob die Aufnahmebohrung möglicherweise zwischen diesen Positionen noch eine Eindrehung aufweist.

Weitere Merkmale der Erfindung ergeben sich aus der nun folgenden Beschreibung der in der Zeichnung dargestellten Ausführungsbeispiele. Es zeigen:
- Fig. 1: einen Längsschnitt eines ersten Ausführungsbeispiels mit angeflanschtem Motor,

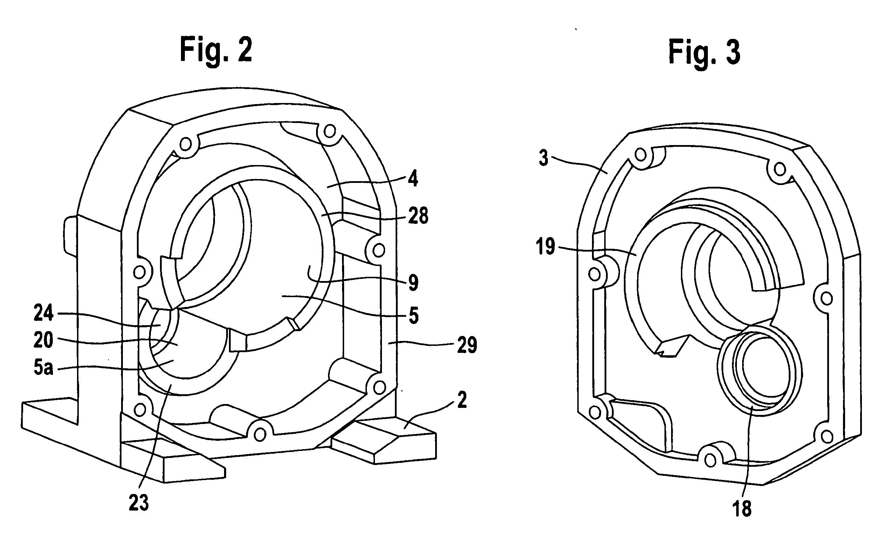

- Fig. 2: eine perspektivische Ansicht des leeren Gehäuses von der Abtriebsseite,
- Fig. 3: eine entsprechende Ansicht des Deckels von der Abtriebsseite,
- Fig. 4: einen Längsschnitt durch ein zweites Ausführungsbeispiel gemäß Linie IV-IV der Fig. 7,
- Fig. 5 und 6: perspektivische Ansichten des leeren Gehäuses des zugehörigen Deckels,
- Fig. 7: eine Ansicht des geöffneten Gehäuses von der Antriebsseite her mit Zwischenwelle,
- Fig. 8: eine vereinfachte Darstellung entsprechend Fig. 7 ohne Zwischenwelle,
- Fig. 9: einen Schnitt gemäß Linie IX-IX der Fig. 4,
- Fig. 10: einen Ausschnitt aus Fig. 8 und
- Fig. 11 bis 14: aufeinanderfolgende Stadien der Montage der Zwischenwelle.

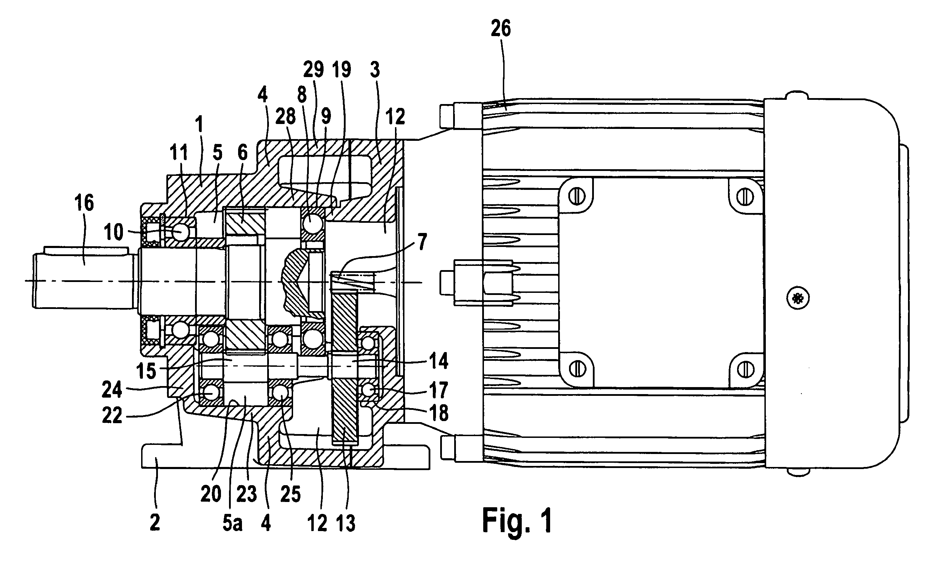

Das von links unten nach rechts oben in Fig. 1 schraffierte Getriebegehäuse 1 des ersten Ausführungsbeispiels hat einen Fuß 2 und eine antriebsseitige Öffnung, die von einem Deckel 3 geschlossen wird, an den im dargestellten Beispiel ein Motor 26 mit in das Getriebegehäuse hineinragendem Eintriebsritzel 7 angeflanscht ist.

Das Gehäuse 1 bildet eine abtriebsseitige Kammer 5, die die Abtriebswelle 16 mit dem Abtriebszahnrad 6 und den zugehörigen Lagern aufnimmt, nämlich einem antriebsseitigen Lager 8 in einer Lagerbohrung 9 und einem abtriebsseitigen Lager 10 in einer Lagerbohrung 11 . Die Kammer 5 mit den Lagerbohrungen 9 und 11 ist - von der Antriebsseite gesehen - nicht hinterschnitten. Die Abtriebswelle 16, das Zahnrad 6 und die Wälzlager 8, 10 können daher von der Antriebsseite her als vormontierte Einheit eingesetzt werden. Axial gehalten wird die Abtriebswelleneinheit in der Kammer 5 antriebsseitig durch einen Vorsprung 19 des Deckels 3 und abtriebsseitig durch einen Sprengring oder einen (nicht gezeigten) Gehäusebund.

Der Teil der abtriebsseitigen Kammer 5, der die Abtriebswelle 16 aufnimmt, wird von einer im wesentlichen achsparallel orientierten Wand 28 eingeschlossen, die sich mindestens im Bereich der Lagerbohrungen 9 und 11 zylindrisch über mehr als 180° erstreckt. Sie ist teils über Rippen, teils über eine Querwand 4 mit dem Fuß 2 verbunden.

Auf der Antriebsseite des Gehäuses befindet sich eine antriebsseitige Kammer 12, die von Wänden 29 und dem Deckel 3 eingeschlossen ist und in welcher sich eine oder mehrere Getriebestufen befinden. Gezeigt ist ein Beispiel, bei dem das Eintriebsritzel 7 auf ein Zwischenzahnrad 13 wirkt, das von einer zwischenwelle 14 getragen ist. Diese trägt an ihrem anderen Ende ein zwischenritzel 15, das mit dem Abtriebszahnrad 6 kämmt. Die abtriebsseitige Kammer 5 weist für die Aufnahme der Zwischenwelle 14 eine von im wesentlichen achsparallel verlaufenden Wänden 23 umgebene und abtriebsseitig von einer Wand 24 begrenzte, seitliche Ausbuchtung 5a auf. Deren zylindrische, sich über mehr als 180° im Umfang erstreckende Innenfläche 20 bildet die Lagerbohrung für zwei Wälzlager der zwischenwelle. Von diesen ist das Wälzlager 22 am abtriebsseitigen Ende der Zwischenwelle 14 der Kammerausbuchtung 5a und das Wälzlager 25 etwa in Wellenmitte und am antriebsseitigen Ende der Kammerausbuchtung 5a angeordnet. Dies ermöglicht eine Abstützung der Zwischenwelle unmittelbar beiderseits des hoch belasteten Zwischenritzels 15. Dadurch wird das von der Zwischenwelle aufzunehmende Biegemoment begrenzt und eine günstige Dimensionierung ermöglicht.

Ein drittes Lager 17 für das antriebsseitige Ende der Zwischenwelle befindet sich in einer Lagerbohrung 18 des Deckels 3. Dadurch wird die Zwischenwelle 14 zusätzlich auf der freien Seite des Zwischenzahnrads 13 abgestützt. Das mittlere Lager wird entsprechend entlastet und kann daher raumsparend dimensioniert werden. Außerdem wird dadurch die Möglichkeit geschaffen, das Zwischenzahnrad in verhältnismäßig großer Entfernung von dem mittleren Lager 25 anzuordnen, was den Vorteil hat, daß dieses mittlere Lager 25 der Zwischenwelle und das antriebsseitige Lager 8 der Abtriebswelle 16 axial versetzt zueinander angeordnet werden können. Dadurch gelingt es, das mittlere Lager 25 der Zwischenwelle - wie oben schon ausgeführt - unmittelbar neben dem Zwischenritzel 15 zu plazieren.

Die Nachteile der statisch unbestimmten Anordnung, deretwegen man normalerweise die Dreifachlagerung einer Welle vermeidet, werden erfindungsgemäß dadurch umgangen, daß das Lager der Welle im Deckel zu dessen Zentrierung benutzt wird. Dadurch ist Gewähr dafür gegeben, daß dieses dritte Lager genau fluchtend mit den beiden anderen Lagern montiert ist. Damit nicht eine unerwünschte Doppelpassung dieses Lagers im Verhältnis zu dem Eingriff des Deckelvorsprungs 19 in die Lagerbohrung 9 zustande kommt, ist dieser Eingriff mit entsprechend großem Spiel ausgestattet. Ebenso wie die Abtriebswelle 16 kann die Zwischenwelle 14 als Montageeinheit mit dem Zwischenzahnrad 13 und allen Lagern 17, 22, 25 als vormontierte Einheit von der Antriebsseite des Getriebes her montiert werden. Der Montageaufwand ist entsprechend gering. Gleichzeitig wird der Vorteil erreicht, dass das gesamte Getriebegehäuse mit Ausnahme des antriebsseitigen Deckels 3 einstückig ausgebildet ist und entsprechend steif ist.

Im zweiten Ausführungsbeispiel bildet das Gehäuse 30 eine antriebsseitige Kammer 32, deren Öffnung von dem Deckel 31 geschlossen ist, und eine abtriebsseitige Kammer 33. Die beiden Kammern 32, 33 sind durch eine Zwischenwand 34 voneinander getrennt. An den Deckel 31 ist eine Antriebseinheit 35 angeflanscht, deren Eintriebsritzel 36 in die antriebsseitige Kammer 32 hineinragt. Die Antriebseinheit kann von einem Antriebsmotor oder einem Zwischengehäuse gebildet sein, das ein besonderes Lager für die Welle des fliegend gelagerten Ritzels 36 bildet. Alternativ kann diese Welle auch jenseits des Ritzels 36 durch ein nicht dargestelltes Lager in der Lagerbohrung 37 der Zwischenwand 34 gelagert sein.

Das Eintriebsritzel 36 wirkt bei der dargestellten zweistufigen Anordnung auf ein Zwischenzahnrad 40, das auf einer Zwischenwelle 41 sitzt, die ein Zwischenritzel 42 bildet. Sie ist dreifach gelagert, nämlich durch ein Lager 43 in einer Lagerbohrung 44 des Deckels 31, durch ein Lager 45 in einer Lagerbohrung 46 der Zwischenwand 34 und ein Lager 47 in einer Lagerbohrung 48 in der abtriebsseitigen Wand 38 der abtriebsseitigen Kammer 33. Die Zwischenwelle 41 ist in ihrer Längsrichtung im Gehäuse durch Absätze festgelegt, welche die Lagerbohrungen 44 und 48, begrenzen.

Das Zwischenritzel 42 wirkt auf ein Abtriebszahnrad 50 auf der Abtriebswelle 51, die durch ein Lager 52 in einer Lagerbohrung 53 der Zwischenwand 34 sowie durch ein Lager 54 in einer Lagerbohrung 55 am abtriebsseitigen Ende des Gehäuses gelagert ist. Die Abtriebswelle 51 mit den zugehörigen Teilen ist durch einen Sprengring 56 vor dem Lager 54 im Gehäuse gesichert.

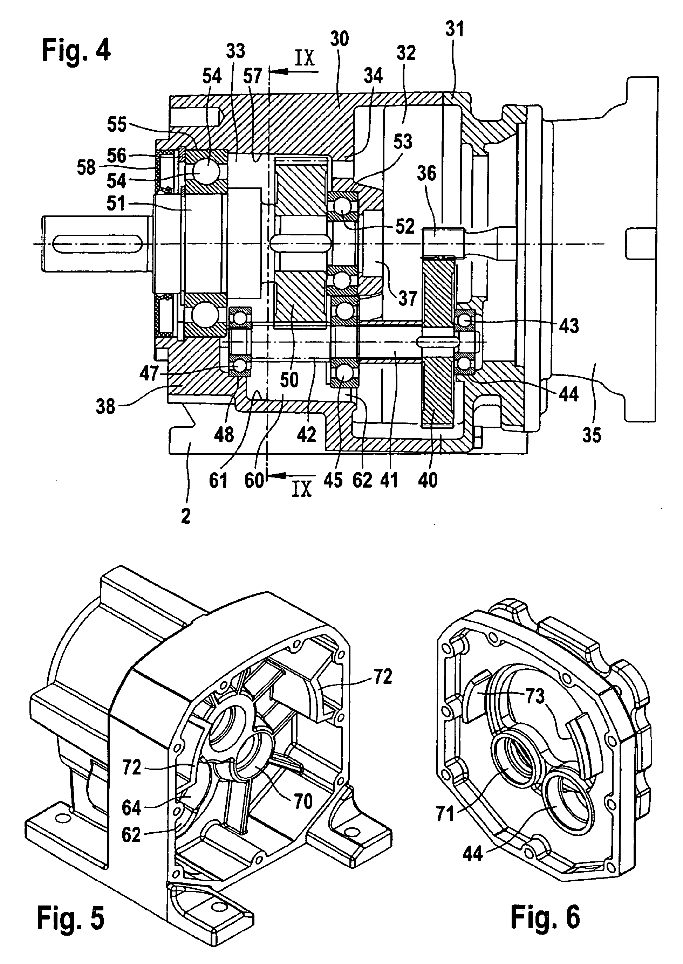

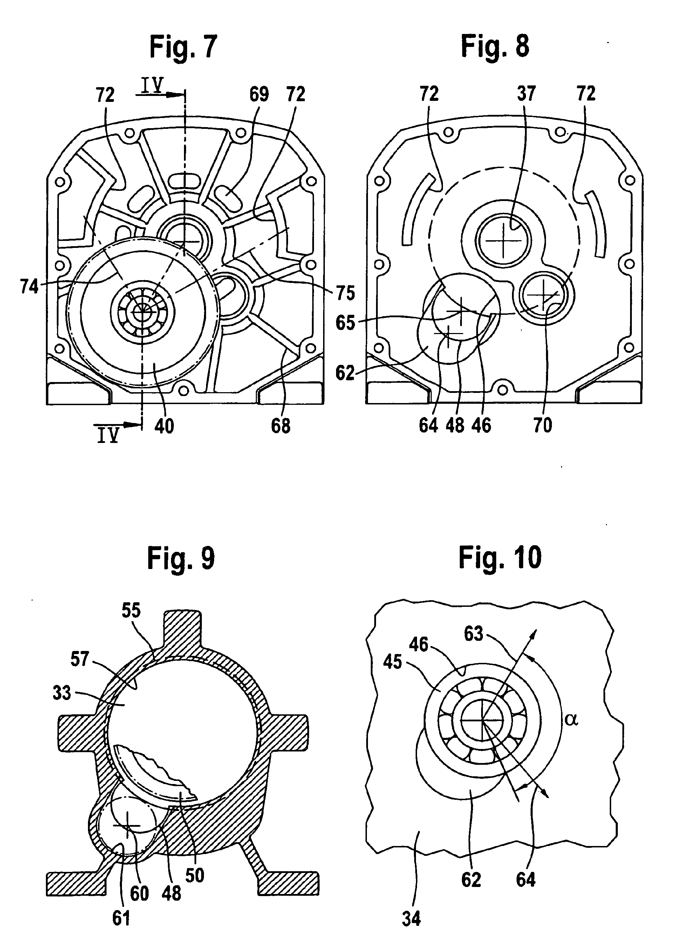

Wie in Fig. 5 und 7 erkennbar, kann die Zwischenwand 34 durch Rippen 68 verstärkt sein und Durchbrechungen 69 enthalten, die in einigen anderen Darstellungen einfachheitshalber weggelassen sind.

Die die antriebsseitige Kammer 32 bildenden Flächen schließen sich hinterschnittfrei an die Öffnung an, die durch den Deckel 31 geschlossen ist. Sie können daher ohne verlorenen Kern im Druckgußverfahren geformt werden. Derjenige Bereich der abtriebsseitigen Kammer 33, in welchem sich die Abtriebswelle 51 befindet und der in Fig. 9 durch die Fläche 57 begrenzt erscheint, schließt sich hinterschnittfrei an deren abtriebsseitige Öffnung an, die von der Lagerbohrung 55 und den gegebenenfalls abtriebsseitig davon gelegenen Bohrungsflächen zur Aufnahme eines Dichtungsdeckels 58 gebildet wird, und kann daher ebenfalls kernlos geformt werden.

Die abtriebsseitige Kammer 33 weist für die Aufnahme der Zwischenwelle 41 eine Erweiterung 60 auf, die abtriebsseitig durch die Wand 38 begrenzt ist und daher nicht von derselben Seite her wie der zur Abtriebswelle 51 gehörige Bereich geformt werden kann. Um kernlos von der entgegengesetzten Seite her geformt werden zu können, schließt sich ihre Oberfläche 61 hinterschnittfrei an eine entsprechende Montageöffnung 62 in der zwischenwand 34 an.

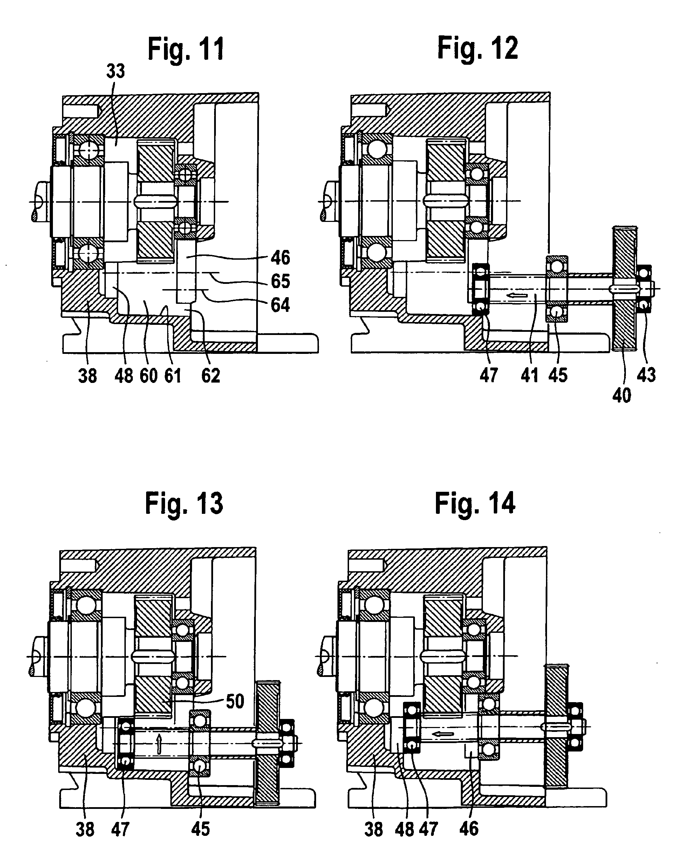

Die Erweiterung 60 der abtriebsseitigen Kammer 33 ist größer, als es für die Aufnahme der Zwischenwelle 41 erforderlich wäre. Sie ist nämlich so groß, daß sie bei der Montage dem abtriebsseitigen Lager 47 neben dem bereits montierten Abtriebszahnrad 50 den Durchgang gestattet. Sie ist zweckmäßigerweise teilweise durch eine zylindrische Fläche 61 begrenzt, deren Mittelachse 64 gegenüber der vorgesehenen Achse 65 der Zwischenwelle in Richtung weg von der Abtriebswelle 51 versetzt ist (Fig. 8 und 11).

Die Montageöffnung 62 bildet eine Erweiterung der für das Zwischenwellenlager 45 in der Zwischenwand 34 vorgesehenen Lagerbohrung 46. Die Erweiterung hat einen Ausschnitt in der Umfangsfläche der Lagerbohrung 46 zur Folge, in welchem das Lager 45 nicht unterstützt ist. Da die Breite dieses Ausschnitts aber geringer ist als der Durchmesser der Lagerbohrung, erstreckt sich die Umfangsfläche der Lagerbohrung 46 über mehr als 180°, nämlich beiderseits des zur Abtriebswelle gerichteten Radius 63 über den Winkel α. Dieser ist so groß, daß die Resultierende 64 der von der Verzahnung herrührenden Kräfte, die bei üblichen Verzahnungen um etwa 110° gegenüber diesem Radius 63 versetzt ist, innerhalb des von der Lagerbohrung 46 unterstützten Bereichs liegt.

Die Montageöffnung 62 und die Erweiterung 60 der abtriebsseitigen Kammer 33 sind groß genug, um die Zwischenwelle 41 mit dem vormontierten abtriebsseitigen Lager 47 gemäß Fig. 12 und 13 am Abtriebszahnrad 50 vorbei einzuschieben. Dies ermöglicht es, die Zwischenwelle 41 mit dem Zwischenzahnrad 40 und allen zugehörigen Lagern 43, 45, 47 als vormontierte Einheit in das Gehäuse einzubringen.

Dieser Vorgang ist in den Fig. 11 bis 14 in unterschiedlichen Stadien veranschaulicht. In Fig. 11 erkennt man unterhalb der Lagerbohrung 46 in der Zwischenwand 34 die Montageöffnung 62, an die sich hinterschnittfrei die Erweiterung 60 der abtriebsseitigen Kammer anschließt. Zunächst wird diese vormontierte Einheit etwa in der Lage der Achse 64 in Pfeilrichtung der Fig. 12 vorgeschoben, bis das abtriebsseitige Lager 47 die Wand 38 erreicht, die seine Lagerbohrung 48 enthält. Sodann wird die Einheit in Pfeilrichtung der Fig. 13 quer verschoben, um die vorgesehene Achslage 65 zu erreichen. Dabei kommen das Ritzel 42 und das Abtriebszahnrad miteinander in Eingriff. Schließlich wird die vormontierte Einheit der Zwischenwelle 41 gemäß Fig. 14 in Pfeilrichtung vorgeschoben, bis die Lager 47 und 45 ihre vorgesehene Position in den Lagerbohrungen 48 und 46 (siehe Fig. 4) gefunden haben. Damit die Querverschiebung aus der Position der Fig. 13 in diejenige der Fig. 14 möglich ist, muß der freie axiale Abstand zwischen dem Abtriebszahnrad 50 und der die abtriebsseitige Lagerbohrung 48 bildenden Wand 38 mindestens der Breite des abtriebsseitigen Lagers 47 entsprechen.

Die für die vormontierte Zwischenwelle in der Zwischenwand vorgesehene Montageöffnung könnte auch von der Lagerbohrung 46 alleine ohne die Erweiterung 62 gebildet werden, wenn die Lagerbohrung groß genug ist. Wenn jedoch das Lager 45 dank der Erweiterung 62 und dank der zusätzlichen Lagerung der Zwischenwelle durch das abtriebsseitige Lager 47 klein ausgeführt werden kann, hat dies den wichtigen Vorteil, daß das zwischenwellenlager 45 in der zwischenwand 34 in etwa derselben Ebene wie das Lager 52 der Abtriebswelle untergebracht werden kann. Mit geringem Aufwand können so die Baulänge und das Gewicht des Getriebes vermindert werden. Auch kann dadurch die Gehäusesteifigkeit, die erfindungsgemäß schon durch die Abwesenheit zusätzlicher Montageöffnungen erhöht wird, weiter gesteigert werden. Der geringe Kostenaufwand wird erreicht durch die gedrängte Bauweise, die kostengünstige Herstellbarkeit des Gehäuses im Druckgußverfahren, die Vormontierbarkeit sämtlicher Wellen, Zahnräder und Lager sowie den möglichen Verzicht auf Zentriermittel am Gehäusedeckel, der weiter unten erläutert wird.

Das zweite Ausführungsbeispiel zeigt ein zweistufiges Getriebe. Es kann aber auch dreistufig ausgebildet sein. In diesem Fall ist in der antriebsseitigen Kammer eine zusätzliche Welle angeordnet, für die die Zwischenwand 34 und der Deckel 31 weitere Lagerbohrungen 70, 71 enthalten. Sie trägt ein zusätzliches Zahnrad, auf das das Eintriebsritzel wirkt und das sich in der Ebene befindet, in der in der zeichnung das Zwischenzahnrad 40 dargestellt ist. Dieses ist auf der Zwischenwelle 41 in der Zeichnung nach links verschoben, um mit dem Ritzel der zusätzlichen Welle zusammenwirken zu können.

Im Hinblick auf den erstrebte Verringerung des Aufwands ist die dreifache Lagerung der Zwischenwelle bemerkenswert, die man im allgemeinen wegen statischer Überbestimmung vermeidet. Im vorliegenden Fall hat sie zum einen der Vorteil, daß sie die oben beschriebene günstige Dimensionierung des in der zwischenwand angeordneten Zwischenwellenlagers ermöglicht, so daß es in einer Ebene mit einem Lager der Abtriebswelle angeordnet werden kann. Sie hat zum anderen der Vorteil, daß für das Zwischenzahnrad die beschriebenen alternativen Stellungen für zwei- und dreistufige Übersetzung vorgesehen werden können, weil es beiderseits gelagert ist. Schließlich hat sie den Vorteil der Deckelzentrierung an dem im Deckel angeordneten Lager 44 der Zwischenwelle 41. Diese genügt bei einer zweistufigen Ausführung des Getriebes. Für den Fall der dreistufigen Ausführung, können das Gehäuse und der Deckel mit zusätzlichen Paaren von zusammenwirkenden Zentrierflächen 72, 73 ausgerüstet werden. Diese sind so angeordnet, daß sie eine ergänzende Zentrierung bezüglich der Drehstellung des Deckels um die Achse der Zwischenwellenlagers 43 bewirken. Dafür ist erforderlich, daß die zentrierflächenpaare einen Flächenanteil aufweisen, der einen Winkel von weniger als 90° mit einem von der Achse der Zwischenwelle ausgehenden Radius 74, 75 einschließen.

## Patentansprüche

1. Zwei- oder dreistufiges Stirnradgetriebe
a) mit einem einstückigen Gehäuse (1, 30), das eine antriebsseitige Kammer (12, 32) mit einer antriebsseitige Deckelöffnung bildet und einen diese schließenden Deckel (3, 31) aufweist,
b) mit einer Abtriebswelle (16, 51), die zwischen zwei Abtriebswellenlagern (8, 10; 52, 54) in einer abtriebsseitigen Kammer (5, 33) des Gehäuses (1, 30) ein Abtriebszahnrad (6, 50) trägt, und
c) mit einer Zwischenwelle (14, 41), die in der antriebsseitigen Kammer (12, 32) ein von einem Eintriebsritzel (7, 36) unmittelbar oder mittelbar angetriebenes zwischenzahnrad (13, 40), ein mit dem Abtriebszahnrad (6, 50) kämmendes Zwischenritzel (15, 42) trägt und durch zwei dem Zwischenritzel (15, 42) benachbarte Zwischenwellenlager (22, 25; 45, 47) gelagert ist,
**dadurch gekennzeichnet,**
d) **daß** ein drittes zwischenwellenlager (17, 43)in einer Lagerbohrung (18, 44) des Deckels (3, 31) angeordnet ist,
e) an dem dieser Deckel (3, 31) längs einer lotrecht zur Achsrichtung verlaufenden Teilungsfuge zentriert ist, und
f) **daß** die Abtriebswelle (16, 51) mit dem Abtriebszahnrad (6, 50) und den Abtriebswellenlagern (8, 10; 52, 54) in der nicht hinterschnittenen abtriebssei tigen Kammer (5, 33) axial montierbar ist.

2. Getriebe nach Anspruch 1, **dadurch gekennzeichnet, daß** die beiden dem zwischenritzel (15, 42) benachbarten Zwischenwellenlager (22, 25, 45, 47) in der zur Deckelöffnung hin mindestens im Rohzustand nicht hinterschnittenen, abtriebsseitigen Kammer (5a, 60) des Gehäuses angeordnet sind,

3. Getriebe nach Anspruch 1 oder 2, **dadurch gekennzeichnet, daß** die jenseits einer Zwischenwand (34) gebildete abtriebsseitige Kammer (33) von zwei Flächen (57, 61) begrenzt ist, von denen die erste (57) mindestens im Rohzustand hinterschnittfrei an eine abtriebsseitige Lagerbohrung (55) für die Abtriebswelle (51) und die zweite (61) mindestens im Rohzustand hinterschnittfrei an eine für die Lagerung und Montage der Zwischenwelle (41) in der Zwischenwand (34) vorgesehene Öffnung (46, 62) anschließt, und daß die zweite Fläche (61) sowie die die antriebsseitige Kammer (32) begrenzenden Flächen mindestens im Rohzustand hinterschnittfrei an die Deckelöffnung anschließen.

4. Getriebe nach Anspruch 3, **dadurch gekennzeichnet, daß** die in der Zwischenwand (34) für die Zwischenwelle (41) vorgesehene Öffnung eine Lagerbohrung (46) umfaßt, die in der Richtung weg von der Abtriebswelle (51) durch eine Montageöffnung (62) erweitert ist, an die sich mindestens im Rohzustand hinterschnittfrei eine Erweiterung (60) der abtriebsseitigen Kammer (33) anschließt, die hinreichend weit für den Montagedurchgang des abtriebsseitigen Zwischenwellenlagers (47)neben dem Abtriebszahnrad (50) ausgebildet ist.

5. Getriebe nach Anspruch 4, **dadurch gekennzeichnet, daß** die in der Zwischenwand (34) für die Zwischenwelle (41) vorgesehene Lagerbohrung (46) über mindestens je 110° beiderseits ihres zu dem abtriebsfernen Lager der Abtriebswelle (51) gerichteten Radius (63) geschlossen ist.

6. Getriebe nach Anspruch 1 oder 2, **dadurch gekennzeichnet, daß** die abtriebsseitige Kammer (5) sich zur Antriebsseite mindestens im Rohzustand hinterschnittfrei öffnet.

7. Getriebe nach einem der Ansprüche 1 bis 6, **dadurch gekennzeichnet, daß** die abtriebsseitige Kammer (5, 5a; 33, 60) von im wesentlichen sich achsparallel erstreckenden Wänden (23, 28) gebildet ist.

8. Getriebe nach einem der Ansprüche 1 bis 7, **dadurch gekennzeichnet, daß** in der antriebsseitigen Kammer (32) für alternativ zwei- und dreistufige Ausführung ein für die Unterbringung zweier Zahnräder in Axialrichtung nebeneinander ausreichender Platz vorhanden ist und im Falle einer zweistufigen Ausführung das Zwischenzahnrad (40) näher dem deckelseitigen Lager (43) als dem mittleren Lager (45) der Zwischenwelle (41) und im Falle einer dreistufigen Ausführung näher dem mittleren Lager (45) angeordnet ist.

9. Getriebe nach einem der Ansprüche 5 bis 8, **dadurch gekennzeichnet, daß** das antriebsseitige Lager (8) der Abtriebswelle (16) und das mittlere Lager (25) der Zwischenwelle (14) axial versetzt zueinander angeordnet sind, wobei das letztere dem Zwischenritzel (42) näher liegt.

10. Getriebe nach einem der Ansprüche 5 bis 9, **dadurch gekennzeichnet, daß** das abtriebsseitige Lager (10) der Abtriebswelle (16) und das abtriebsseitige Lager (22) der zwischenwelle (14) axial versetzt zueinander angeordnet sind, wobei das letztere dem Zwischenritzel (15) näher liegt.

11. Getriebe nach einem der Ansprüche 1 bis 10, **dadurch gekennzeichnet, daß** im Falle eines zweistufigen Getriebes der Gehäusedeckel (3, 31) außer dem antriebsseitigen Lager (17, 43) der Zwischenwelle (14, 41) keine weiteren zentriermittel aufweist.

12. Getriebe nach einem der Ansprüche 1 bis 11, **dadurch gekennzeichnet, daß** im Falle eines für ein dreistufiges Getriebe mit einer weiteren Zwischenwelle in der antriebsseitigen Kammer (32) eingerichteten Gehäuses ein weiteres Zentriermittel (72, 73) vorhanden ist, dessen Zentrierwirkung im wesentlichen quer zu einem von der Achse (65) der zwischenwelle (41) ausgehenden Radius (74, 75) gerichtet ist.

## Claims

1. Two-stage or three-stage spur gear transmission
a) having a single-piece housing (1, 30) which forms a drive-input-side chamber (12, 32) having a drive-input-side cover opening and has a cover (3, 31) which closes off said cover opening,
b) having a drive output shaft (16, 51) which supports a drive output gearwheel (6, 50) between two drive output shaft bearings (8, 10; 52, 54) in a drive-output-side chamber (5, 33) of the housing (1, 30), and
c) having an intermediate shaft (14, 41) which supports, in the drive-input-side chamber (12, 32), an intermediate gearwheel (13, 40), which is driven directly or indirectly by an input drive pinion (7, 36), and an intermediate pinion (15, 42), which meshes with the drive output gearwheel (6, 50), and is mounted by means of two intermediate shaft bearings (22, 25; 45, 47) which are adjacent to the intermediate pinion (15, 42),
**characterized**
d) **in that** a third intermediate shaft bearing (17, 43) is arranged in a bearing bore (18, 44) of the cover (3, 31),
e) on which third intermediate shaft bearing (17, 43) said cover (3, 31) is centred along a parting joint which runs perpendicular to the axis direction, and
f) **in that** the drive output shaft (16, 51) can be axially mounted with the drive output gearwheel (6, 50) and the drive output shaft bearings (8, 10; 52, 54) in the drive-output-side chamber (5, 33) which is not undercut.

2. Transmission according to Claim 1, **characterized in that** the two intermediate shaft bearings (22, 25, 45, 47) which are adjacent to the intermediate pinion (15, 42) are arranged in the drive-output-side chamber (5a, 60), which is not undercut in the direction of the cover opening at least in the unprocessed state, of the housing.

3. Transmission according to Claim 1 or 2, **characterized in that** the drive-output-side chamber (33) formed on the other side of a partition (34) is delimited by two faces (57, 61), the first (57) of which adjoins, without an undercut at least in the unprocessed state, a drive-output-side bearing bore (55) for the drive output shaft (51), and the second (61) of which adjoins, without an undercut at least in the unprocessed state, an opening (46, 62) which is provided for the mounting and assembly of the intermediate shaft (41) in the partition (34), and **in that** the second face (61) and the faces which delimit the drive-input-side chamber (32) adjoin the cover opening without an undercut at least in the unprocessed state.

4. Transmission according to Claim 3, **characterized in that** the opening which is provided in the partition (34) for the intermediate shaft (41) comprises a bearing bore (46) which is widened in the direction away from the drive output shaft (51) by an assembly opening (62) which is adjoined, without an undercut at least in the unprocessed state, by a widening (60) of the drive-output-side chamber (33), which widening (60) is formed so as to be sufficiently wide for the passage, during assembly, of the drive-output-side intermediate shaft bearing (47) in addition to the drive output gearwheel (50).

5. Transmission according to Claim 4, **characterized in that** the bearing bore (46) which is provided in the partition (34) for the intermediate shaft (41) is closed off over at least in each case 110° at both sides of its radius (63) which is aligned towards that bearing of the drive output shaft (51) which is remote from the drive output.

6. Transmission according to Claim 1 or 2, **characterized in that** the drive-output-side chamber (5) opens towards the drive input side without an undercut at least in the unprocessed state.

7. Transmission according to one of Claims 1 to 6, **characterized in that** the drive-output-side chamber (5, 5a; 33, 60) is formed by walls (23, 28) which extend substantially axially parallel.

8. Transmission according to one of Claims 1 to 7, **characterized in that**, for alternatively two- and three-stage design, a sufficient space is provided in the drive-input-side chamber (32) for the accommodation of two gearwheels in the axial direction next to one another, and in the case of a two-stage design, the intermediate gearwheel (40) is arranged closer to the cover-side bearing (43) than to the central bearing (45) of the intermediate shaft (41) and in the case of a three-stage design, closer to the central bearing (45).

9. Transmission according to one of Claims 5 to 8, **characterized in that** the drive-input-side bearing (8) of the drive output shaft (16) and the central bearing (25) of the intermediate shaft (14) are arranged axially offset with respect to one another, with said central bearing (25) being situated closer to the intermediate pinion (42).

10. Transmission according to one of Claims 5 to 9, **characterized in that** the drive-output-side bearing (10) of the drive output shaft (16) and the drive-output-side bearing (22) of the intermediate shaft (14) are arranged axially offset with respect to one another, with said drive-output-side bearing (22) being situated closer to the intermediate pinion (15).

11. Transmission according to one of Claims 1 to 10, **characterized in that**, in the case of a two-stage transmission, the housing cover (3, 31) has no further centring means other than the drive-input-side bearing (17, 43) of the intermediate shaft (14, 41).

12. Transmission according to one of Claims 1 to 11, **characterized in that**, in the case of a housing which is designed for a three-stage transmission with a further intermediate shaft in the drive-input-side chamber (32), a further centring means (72, 73) is provided, the centring action of which is aligned substantially transversely to a radius (74, 75) which proceeds from the axis (65) of the intermediate shaft (41).

## Revendications

1. Engrenage à roues droites à deux ou trois étages,
a) comportant un carter (1, 30) d'un seul tenant, qui forme une chambre (12, 13) du côté entraînement avec une ouverture du côté entraînement et comporte un couvercle (3, 31) obturant cette dernière,
b) comportant un arbre mené (16, 51) qui, entre deux paliers (8, 10 ; 52, 54), porte une roue dentée menée (6, 50) dans une chambre (5, 33) du côté entraîné du carter (1, 30), et
c) comportant un arbre intermédiaire (14, 41), qui porte, dans la chambre (12, 32) du côté entraînement, une roue dentée intermédiaire (13, 40) actionnée directement ou indirectement par un pignon d'entraînement (7, 36), un pignon intermédiaire (15, 42) engrenant avec la roue dentée menée (6, 50) et qui est monté par l'intermédiaire de deux paliers (22, 25 ; 45, 47) adjacents au pignon intermédiaire (15, 42),
**caractérisé**
d) **en ce qu**'un troisième palier (17, 43) de l'arbre intermédiaire est disposé dans une forure formant palier (18, 44) du couvercle (3, 31),
e) au niveau duquel palier ledit couvercle (3, 31) est centrée le long d'un joint de séparation perpendiculaire à la direction axiale, et
f) en ce que l'arbre mené (16, 51), avec la roue dentée menée (6, 50) et les paliers (8, 10 ; 52, 54) de l'arbre mené, est apte à être monté dans la chambre (5, 33) du côté entraîné, non détalonnée.

2. Engrenage selon la revendication 1, **caractérisé en ce que** les deux paliers (22, 25, 45, 47) de l'arbre intermédiaire, adjacents au pignon intermédiaire (15, 42), sont disposés dans la chambre (5a, 60) du côté entraîné, non détalonnée au moins à l'état brut en direction de l'ouverture pour couvercle.

3. Engrenage selon la revendication 1 ou 2, **caractérisé en ce que** la chambre (33) du côté entraîné, réalisée de l'autre côté d'une cloison (34), est délimitée par deux surfaces (57, 61), dont la première (57), non détalonnée au moins à l'état brut, est adjacente à une forure formant palier (55) du côté entraîné pour l'arbre mené (51), et la deuxième surface (61), non détalonnée au moins à l'état brut, est adjacente à une ouverture (46, 62) prévue dans la cloison (34) pour l'appui et le montage de l'arbre intermédiaire (41), et **en ce que** la deuxième surface (61), ainsi que les surfaces délimitant la chambre (32) du côté entraînement, non détalonnées au moins à l'état brut, sont adjacentes à l'ouverture pour couvercle.

4. Engrenage selon la revendication 3, **caractérisé en ce que** l'ouverture, prévue dans la cloison (34) pour l'arbre intermédiaire (41), comporte une forure formant palier (46) qui s'élargit dans le sens s'écartant de l'arbre mené (51) par un orifice de montage (62), qui est prolongé par un élargissement (60), non détalonné au moins à l'état brut, de la chambre (33) du côté entraîné, lequel est réalisé avec une largeur suffisante pour faire passer le palier (47) de l'arbre intermédiaire du côté entraîné, à côté de la roue dentée menée (50).

5. Engrenage selon la revendication 4, **caractérisé en ce que** l'orifice formant palier (46), prévu dans la cloison (34) pour l'arbre intermédiaire (41), est fermé sur au moins 110° de part et d'autre de son rayon (63) orienté vers le palier, éloigné du côté entraîné, de l'arbre mené (51).

6. Engrenage selon la revendication 1 ou 2, **caractérisé en ce que** la chambre (5) du côté entraîné s'ouvre de manière non détalonnée au moins à l'état brut vers le côté entraînement.

7. Engrenage selon l'une quelconque des revendications 1 à 6, **caractérisé en ce que** la chambre (5, 5a ; 33, 60)) du côté entraîné est formée en amont de parois (23, 28) orientées sensiblement parallèlement à l'axe.

8. Engrenage selon l'une quelconque des revendications 1 à 7, **caractérisé en ce que** dans la chambre (32) du côté entraînement, il est prévu pour une réalisation alternative à deux et trois étages, une place suffisante pour le montage de deux roues dentées l'une à côté de l'autre dans la direction axiale, et la roue dentée intermédiaire (40) est montée, dans le cas d'une réalisation à deux étages, plus près du palier (43) du côté couvercle que le palier (45) central de l'arbre intermédiaire (41), et, dans le cas d'une réalisation à trois étages, plus près du palier central (45).

9. Engrenage selon l'une quelconque des revendications 5 à 8, **caractérisé en ce que** le palier (8) du côté entraînement de l'arbre mené (16) et le palier central (25) de l'arbre intermédiaire (14) sont montés en étant décalés axialement l'un par rapport à l'autre, le dernier palier étant situé plus près du pignon intermédiaire (42).

10. Engrenage selon l'une quelconque des revendications 5 à 9, **caractérisé en ce que** le palier (10) du côté entraîné de l'arbre mené (16) et le palier (22) du côté entraîné de l'arbre intermédiaire (14) sont montés en étant décalés axialement l'un par rapport à l'autre, le dernier palier étant situé plus près du pignon intermédiaire (15).

11. Engrenage selon l'une quelconque des revendications 1 à 10, **caractérisé en ce que**, dans le cas d'un engrenage à deux étages, le couvercle (3, 31) du carter, outre le palier (17, 43) du côté entraînement de l'arbre intermédiaire (14, 41), ne comporte pas d'autres moyens de centrage.

12. Engrenage selon l'une quelconque des revendications 1 à 11, **caractérisé en ce que**, dans le cas d'un engrenage à trois étages comportant un arbre intermédiaire supplémentaire dans la chambre (32) du côté entraînement du carter, il est prévu un moyen de centrage (72, 73) supplémentaire, dont l'action de centrage est orientée sensiblement transversalement à un rayon (74, 75) partant de l'axe (65) de l'arbre intermédiaire (41).
